# EUROPEAN PATENT SPECIFICATION

(11) **EP 2 956 751 B1**
(45) Date of publication and mention of the grant of the patent: **16.06.2021**
(21) Application number: 13773427.3
(22) Date of filing: 18.03.2013
(51) Int. Cl.: G01M 5/00

(54) **METHOD AND MONITORING DEVICE FOR MONITORING A STRUCTURE**
VERFAHREN UND VORRICHTUNG ZUR ÜBERWACHUNG EINER STRUKTUR
PROCÉDÉ ET DISPOSITIF DE SURVEILLANCE POUR SURVEILLER UNE STRUCTURE

(43) Date of publication of application: 23.12.2015
(73) Proprietor: Siemens Aktiengesellschaft, 80333 München (DE)
(72) Inventor: MOKHOV, Ilya Igorevich, St.Petersburg 192281 (RU); PYAYT, Alexander Leonidovich, St. Petersburg 198207 (RU); KOZIONOV, Alexey Pietrovich, Pskov 180005 (RU)
(74) Representative: Isarpatent
(86) International application number: PCT/RU2013/000209
(87) International publication number: WO 2014/148933

(56) References cited:
- WO-A1-2014/142701
- US-A- 5 566 569
- US-A1- 2008 078 247
- US-A1- 2010 013 497
- A Pyayt ET AL: "Data-driven modelling for flood defence structure analysis" In: "Comprehensive Flood Risk Management", 1 November 2012 (2012-11-01), CRC Press, XP055116080, ISBN: 978-0-20-337451-1 pages 978-0, DOI: 10.1201/b13715-44,
- Jonathan Simm ET AL: "Interpreting sensor measurements in dikes - experiences from UrbanFlood pilot sites", Comprehensive Flood Risk Management: research for policy and practice; proceedings of the 2nd European Conference on Flood Risk Management, FLOODrisk 2012, 20 November 2012 (2012-11-20), pages 327-336, XP055115744, DOI: 10.1201/b13715-47 ISBN: 978-0-41-562144-1

## Description

The invention relates to a method for monitoring a structure, which separates a first medium from a second medium. The first medium exerts a higher pressure on the structure than the second medium. By means of each of at least one first sensor and at least one second sensor at least one physical quantity concerning this structure is captured, with a dependency existing between these physical quantities. The measured values concerning the corresponding physical quantities are transmitted to a computing device.

Moreover, the invention relates to a monitoring device for a structure, by which a first medium is separated from a second medium. The structure may for instance be a dam or a dike.

Presently usual methods for monitoring such structures can be divided in three categories. The first category includes visual inspection, in which the structure to be examined is reviewed and checked for damages by trained personnel. However, in case of visual review of the structure, the risk of identifying an imminent damage too late is high since the visual inspection is not a continuous monitoring but a rare event compared to the permanent sensory monitoring. Furthermore, there is the risk that in visual review of the structure, already existing or shortly imminent damages are not recognized or missed.

Within the scope of the second category, the monitoring is effected by means of a model, which reproduces the physical conditions of the structure to be monitored. A corresponding example is described in "Pyayt, A.L. et al; Artificial Intelligence and Finite Element Modeling for Monitoring Flood Defence Structures". On the one hand, it is usual to use simple physical relations for the construction of a physical model for evaluating the state of the structure. On the other hand, the structure can be emulated by means of expensive multi-dimensional models. These multi-dimensional models are mostly based on the so-called finite element method (FEM), by means of which deformations, forces and mechanical stresses on or in the structure can be determined.

A physical model is based on information about the construction, the physical environmental conditions, to which the structure is subject or which apply to the structure, as well as geometric data. Furthermore, information about physical characteristics of the material relating to the structure, in particular the soil, have to be obtained, which is associated with additional expenditure. For the modeling itself, hours or even days are required. A similar time horizon can be estimated for the computation of the structure's state by means of the model, wherefore considerable delay of diagnosis relating to the structure in the form of computational results has to be taken into account. An example hereto is specified in "Krzhizhanovskaya, V.V. eat al; Flood early warning system: design, implementation and computational modules". In this publication, data expensively generated of a virtual emulation of a dam is supplied to a flooding simulation. Due to the extremely great operational effort of this virtual dam associated therewith, the operation by experts is required. Parallel to this complex simulation, it is roughly estimated if a risk for the dam is present by a system of artificial intelligence, and by erosion simulation, it is approximately computed how long a possible flood caused by the erosion lasts and which amounts of water escape by the erosion.

The third category involves reading out data of a network of sensors attached to the structure for monitoring. If a sufficiently close-meshed network of sensors is used for monitoring, thus, different physical variables can be determined with high resolution. On the one hand, it is usual to use glass fiber cables for measuring temperatures and on the other hand pressure sensors for measuring the pore pressure in the structure. The employment of a network of glass fiber cables allows e.g. detecting an event of damage, in which water flows through the structure, thus e.g. a dam break. Thus, at the location of flowing through medium, an abnormal value for the temperature is determined by a glass fiber cable directly flown by the medium or at least wetted by seeping of the medium.

The employment of a pronounced network of sensors is the more expensive, the more close-meshed the sensors are placed, wherein in addition the risk of false measurement or of false interpretations of the measurements exists. The event of damage of the dam break can be detected by the temperature measurements by means of the glass fiber cables, however, the condition for damage identification is a measurable temperature difference between structure and temperature of the flowing through medium. These temperature differences are distinct especially in particularly warm or particularly cold seasons and thus especially well measurable also in summer and in winter. In seasons with moderate temperatures such as in spring or autumn, the temperatures of the structure and of the passing medium often have too low temperature differences that a medium passage can be detected by means of the temperature measurement by glass fiber cables.

By the employment of a network of pressure sensors, irregularities of the pore pressure of the structure can be determined independently of the season, but this sensor network has a usually lower spatial resolution. This entails the risk that occurring or already existing damages are not recognized.

For example, A Pyayt ET AL (ISBN: 978-0-20-337451-1) describe a comprehensive flood risk management with a development of a high-accuracy model that predicts the "normal" behaviour of a complete sensor system, wherein a deviation of sensor data from this "normal" model output is used to identify an anomaly in the sensor measurements.

Therefore, it is the object of the present invention to provide a particularly effective and at the same time particularly reliable method and monitoring device of the initially mentioned kind.

This task is solved by a method having the features of patent claim 1 and by a monitoring device having the features of patent claim 9. Advantageous embodiments with expedient further developments of the invention are indicated in the dependent patent claims.

In the method according to the invention on the basis of the measured value of the first sensor a data value of the second sensor is modeled, wherein the modeled data value and the measured value of the second sensor are used for assessment of the structure.

A particularly comprehensive and secure monitoring of the structure is achieved by way of comparing the real measured values in the form of corresponding sensor data and the modeled data values. In this connection the physical dependencies of real measured values can be passed on by means of a so-called real transfer function. By way of the modeling of the data value of the second sensor in dependency on the measured value of the first sensor the real physical interrelationship between the measured values of the first sensor and of the second sensor is simulated. Consequently, the real measured values, or the interrelationships between several real measured values, are modeled. This modeling of the real interrelationships can be in linear and/or discrete form. By way of comparing the modeled data value, which indicates an expected measured value of the second sensor, with the actual measured value of the second sensor it can be identified whether a normal or an abnormal state of the structure is given. If namely the modeled data value and the measured value match in sufficient approximation, it can be assumed that the normal state of the structure is given. However, in the case of a deviation from the modeled data value from the measured value, this is indicative of a damage to the structure. Since namely the model describes the physical interrelationship between the measured values of the first sensor and of the second sensor given in the normal state of the structure, in the case of a deviation of the measured value of the second sensor from the modeled data value a deviation from the normal state of the structure can be assumed. As the modeling exhibits a particularly high computing quality, it allows for predicting or simulating the normal state of the structure. Moreover, by way of modeling real physical interrelationships a damage to the structure, for instance a dam or a dike, are identified at a particularly early stage.

It has turned out to be advantageous, if as the at least one first sensor a sensor arranged in the first medium is employed and as the at least one second sensor a sensor arranged in the structure is employed.

By arranging at least one sensor within the medium and at least one further sensor within the structure for the modeling particularly valuable and reliable interrelationships between the sensor data can be gained, Since the dependency of the measured values between sensors on the side of the medium and sensors on the side of the structure is described by comprehensive mathematical models, the state of the structure can be assessed with a particularly high degree of accuracy. The results of the computing device in this connection are ever more precise, the more sensors both on the side of the medium as well as on the side of the structure are employed, because a direct comparison of the real measured values with the simulated values of the model can be made. If more measured values are available, the model of the real transfer function can be validated particularly reliably. As a consequence, the model provides results that match the real measured values particularly well.

Arranging some sensors in the medium and some in the structure medium allows for identifying particularly well which environmental conditions are prevailing, and which physical interrelationships these entail for the structure. For instance in the case of a normal state of the structure an oscillating signal with a certain amplitude can be captured by means of the sensor arranged in the medium, whilst an oscillating signal resulting therefrom is captured by the sensor arranged in the structure. In this way in the normal state of the structure, in which accordingly no damages are given, for instance an attenuation of the measured values as well as a delay in time of the measured values that are characteristic of this state are identified to exist between the measured values of the sensor arranged in the medium and the sensor arranged in the structure. In the case of a looming or existing damage to the structure these characteristical quantities, such as attenuation or delay in time, may change significantly, whereby the damage can be detected particularly reliably. The sensor arranged in the medium may in particular be designed as a water level sensor.

In a further advantageous embodiment of the invention as the at least one first sensor and as the at least one second sensor a sensor arranged in the structure is employed.

The impending damage to a structure, as already mentioned, can be detected by a combination of sensors arranged in the medium and sensors arranged in the structure. Damages to the structure can be detected particularly effectively, if all sensors employed are attached to the structure and for instance are configured as pressure sensors or as pore pressure sensors. Whilst sensors arranged in the medium capture the environmental conditions relevant to the structure, pore pressure sensors at various places of the structure reproduce a pore pressure within the structure resulting from the pressure exerted by the medium upon the structure. Since the pore pressure sensors reflect the immediate effects of the environmental conditions, i.e. for instance the water level, upon the pressure prevailing in the structure, these sensors are particularly suitable for being employed in such a monitoring device and for the detection of damages in the structure.

It is further advantageous, if the computing device on the basis of the measured values of the at least one first sensor and the measured values of the at least one second sensor establishes a prediction data set for assessing the structure, wherein from a comparison of the prediction data set with the measured values of the at least one second sensor a deviation is determined.

By means of already known, previously established measured values, which reflect the factual conditions in the structure, the computing device can generate a prediction data set, by means of which the assessment of the state of the structure in the near future can be made. In other words, on the basis of the prediction data set it is possible to assess the development of the structure's state in the near future. By taking real measured values into consideration when generating the prediction data set, inaccuracies of the model have less influence, as the accumulation of simulation errors is prevented particularly effectively. As the prediction data set facilitates an assessment of the future state of the structure, damages in the structure can be identified particularly early.

Furthermore it is particularly advantageous if the computing device on the basis of already known measured values of the at least one first sensor and modeled data values corresponding to the measured values models a current data value, which is used for the assessment of the structure, wherein from a comparison of the current modeled data value with the already known measured values of the at least one second sensor a deviation is identified.

When modeling data values part of the real measured values of the sensors is used. These measured values, on the one hand, describe the current, i.e. the presently given state of the structure, as well as, on the other hand, already known measured values. In other words, measured values captured in the past, i.e. prior to the current data value, correspond to the already known measured values.

In order to be able to assess the state of the structure particularly precisely, for the simulation of the current state of the structure also modeled data values from previous simulations are used. The modeled data values from previous simulation are assigned to already known measured values of the at least one first sensor in this connection. In other words, these earlier modeled data values depend on the already known measured values. By way of comparing the data values modeled by the simulation with already known measured values the current simulation results, i.e. the current modeled data values can be validated. In other words, thereby the evaluation of the quality of the simulation can be particularly informative. If the real measured values are exposed to a drift, this drift can be identified particularly reliably. A drift of measured values for instance occurs, if the temperature of a pressure sensor rises inadmissibly and as a consequence internal stresses of the overheated sensor distort the measured value, or if electromagnetic influences affect the sensor and thus distort the measured value.

It is further advantageous if for modeling the data value, regression data sets concerning the measured values and mean value data sets concerning the measured values are employed.

By taking the regression into consideration when modeling the data value already known measured values of the sensors or modeled data values from previous simulations are used. In other words in the regression data values and measured values that are dependent on the past are used. Thereby it is ensured that current simulation results reflect the real measurement values of the sensors. By way of using mean value data sets accidental variations or perturbations of measured values of the sensors are identified and, if applicable, filtered. These coincidental variations are also referred to as white or random noise. The mean value data sets thus also comprise a so-called moving average of the input quantities. The consideration of the mean value data sets renders the model particularly insensitive to outer perturbations.

It is a further advantage if the mutual dependency of the measured values of the at least one first sensor and of the at least one second sensor are established in consideration of the regression data sets.

By using the regression data sets for establishing the dependency of the measured values of the second sensor upon those of the first sensor a particularly high model quality is achieved. Since the regression data sets depend on already known measured values or on already modeled data values and thus on the past, the measuring errors distorting the measured values can be used particularly effectively for interpreting the dependency of the measured values of the sensors. In other words, on the basis of the regression a particularly precise dependency of the measured values of the various sensors is ensured, in that already known errors, such as for instance in the form of white noise, are considered in the evaluation of the mutual dependency of the measured values of the sensors.

It is particularly advantageous, if a difference between the modeled data value and the measured value of the at least one second sensor is evaluated by a classification component and by this classification component a confidence value for the existence of a normal state of the structure is established.

The classification component allow for a particularly reliable and fast determination of the degree of damage in the structure. The difference between the modeled data value and the measured value can be determined particularly fast, if as classification component an artificial intelligence in the form of a neural network is employed. The output quantity of the neural network in this connection is a probability for a normal behaviour, or for the existence of a normal state of the structure. Particularly informative is the evaluation by the classification component, if already known measured values of the sensors are used for training of the neural network, i.e. the classification component. Moreover, preferably the deviation of the modeled data values from the measured values of the at least one second sensor is used for training of the neural network, i.e. the classification component.

Further, it is also an advantage, if the computing device employs a linear transfer function model, in order to describe the mutual dependency of the measured values of the at least one first sensor and the at least one second sensor.

Due to their high computing speed as well as their high accuracy transfer function models are particularly suitable for monitoring the structure. If as linear transfer function model for instance a so-called ARMAX model is used, data sets describing states in the past and stochastic interferences are used. In this connection the past of the structure is captured preferably by means of regression data sets and the stochastic interferences on the basis of mean value data sets. Moreover, ARMAX models can be used particularly well for predicting states in the near future. Besides, ARMAX models are highly flexible and particularly suitable for describing time series, wherein even complex dynamic patterns can be captured.

The monitoring device according to the invention serves for monitoring a structure, by which a first medium can be separated from a second medium. By means of the first medium a higher pressure can be exerted upon the structure than by means of the second medium. The monitoring device has at least one first sensor and at least one second sensor for capturing each at least one physical quantity concerning this structure. Between this physical quantities exists a dependency. A computing device of the monitoring device is coupled in such a way with the at least one first sensor and the at least one second sensor that the measured values concerning the corresponding physical quantities can be transferred to it. The computing device is configured to model a data value of the second sensor on the basis of the measured value of the first sensor, and to use the modeled data value as well as the measured value of the second sensor for assessing the structure.

By the employment of the monitoring device, maintenance cost arising as a result of visual examination of the structure can be reduced to a minimum. Namely, inspection only has to be effected in case of presence of a critical state or imminent damage. By means of the monitoring device, thus, particularly effective and at the same time particularly reliable monitoring of the structure is allowed.

The advantages and preferred embodiments described for the method according to the invention also apply to the monitoring device according to the invention and vice versa.

The features and feature combinations mentioned above in the description as well as the features and feature combinations mentioned below in the description of figures and/or shown in the figure alone are usable not only in the respectively specified combination, but also in other combinations or alone without departing from the scope of the invention.

Further advantages, features and details of the invention are apparent from the claims, the following description of preferred embodiments as well as based on the drawings.

The drawings show in:
- FIG 1: a structure designed as a dam, which es equipped with sensors and separating the medium water from the medium air;
- FIG 2: the dam as shown in FIG 1, wherein the two sensors are arranged in the structure;
- FIG 3: the determination of a prediction data set and the determination of discrepancies between the prediction data set and corresponding physical measurements;
- FIG 4: modeling of a current data value which is used for evaluation of the dam;
- FIG 5: a block diagram with both a linear transfer function model and its input and output variables
- FIG 6: schematically a mathematical equation, by means of which the linear transfer function model can be implemented according to FIG 5;
- FIG 7: schematically the use of a mean standard deviation, which is used as a termination criterion to terminate the improvement of quality once the model quality is sufficiently high whereat the model is based on linear transfer functions and the real measured values are used to enhance the model quality;
- FIG 8: schematically and exemplarily a further possibility to improve the model quality of a linear transfer function model by using real measured values, once the model quality is sufficiently high;
- FIG 9: curves, which exemplarily illustrate the development over time of real measured values whereat one of the sensors is placed in the water and the other one is placed in the dam;
- FIG 10: curves, which exemplarily illustrate the development of a real measured value as well as the development of a currently modeled value over time to illustrate the difference between the measured value and the currently modeled data value as well as a confidence value; and
- FIG 11: curves, which exemplarily illustrate the development of a real measured value as well as the development of a data value determined by the prediction data set over time to illustrate the difference between the measured value and the currently modeled data value as well as a confidence value;

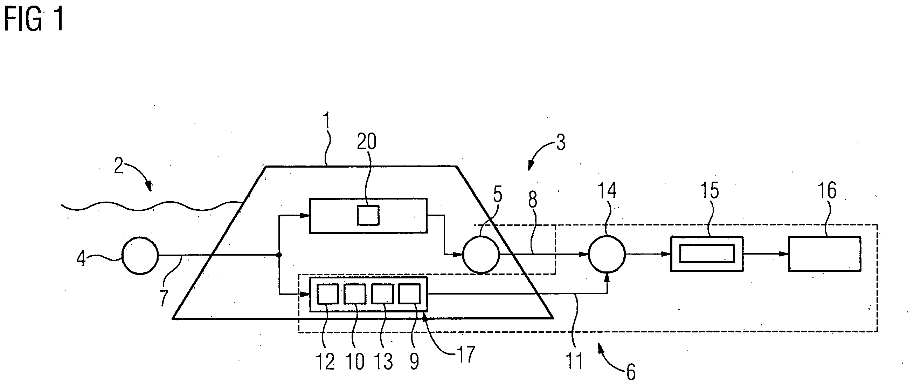

FIG 1 illustrates schematically a structure which is designed as a dam 1 and separates the medium air 3 from the medium water 2. At least one sensor 4 is located in the water 2, whereat the sensor is designed as a water level sensor which transmits measured values 7 to a computing device 6. Due to the fact that the sensor 4 is placed in the water 2, the sensor transmits environmental conditions concerning the dam 1. Both the measured values 7 from the sensor 4 and the measured values 8 from the sensor 5, which is placed in the dam 1 and which is designed as a pore pressure sensor are transmitted to the computing device 6.
In other words, the measured values 7 and 8 are evaluated by the computing device 6. A physical correlation 20, which exists between the measured values 7 and 8 and therefore relates to a real transfer function is modeled by the computing device 6. In this connection by means of the measured values 7 of the first sensor 4, modeled data values 11 are determined which simulate expected measured values 8 of the second sensor 5 whereat the expected values 8 relate to the measured values 7 of the first sensor 4. Then the real measured values 8 from the second sensor 5 are compared with the currently modeled data values by the computing device 6. In addition to the currently modeled data values the computing device 6 comprises a linear transfer function model 17, which is designed as an ARMAX model.

Thereby the linear transfer function model 17 comprises modeled data values 9, which have been modeled in an earlier time, as well as prediction data sets 10, as well as regression data sets 12 and mean value data sets 13. Furthermore the computing device 6 comprises a component for detecting a difference 14 between the measured values 8 from the second sensor 5 and the modeled data values 11 as well as a classification component 15 and a confidence value 16. The computing device 6 therefore determines a currently modeled data value 11 based on one of the measured values 7 from the sensor 4 whereat the computing device 6 determines the difference 14 by means of a comparison with the measured value 8 from the sensor 5. The classification component 15 detects the difference 14 and determines the confidence value 16, which outputs a likelihood for a normal status of the dam 1. In other words, by outputting the confidence value 16, the risk of an impending or already existing damage of the dam 1 is determined.

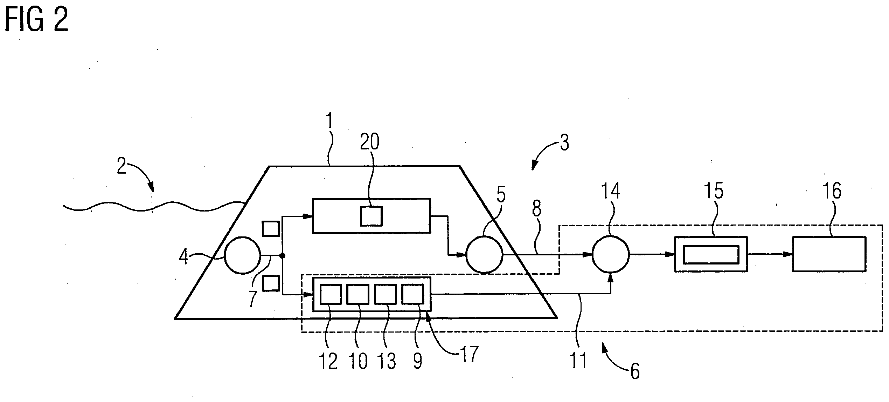

FIG 2 agrees with FIG 1 over a wide range hence in the following only the differences are discussed. The sensor 4 is placed in the dam and transmits data which relate to its measured values 7 of pore pressures. The pore pressures which are derived from the inside of the dam 1 depend on the environmental conditions. In other words, the pore pressures and thus the values 7 and 8 for example change with a different height of the water level of the water 2 or depend on corresponding waves. Furthermore the pore pressure and thus the measured values 7,8 of the first sensor 4 and the second sensor 5 change, if the dam 1 is damaged. Based on the measured values 7 from the sensor 4 the computing device 6 determines the currently modeled data value 11, whereat by means of a comparison with the measured value 8 from the sensor 5 the difference 14 is determined.

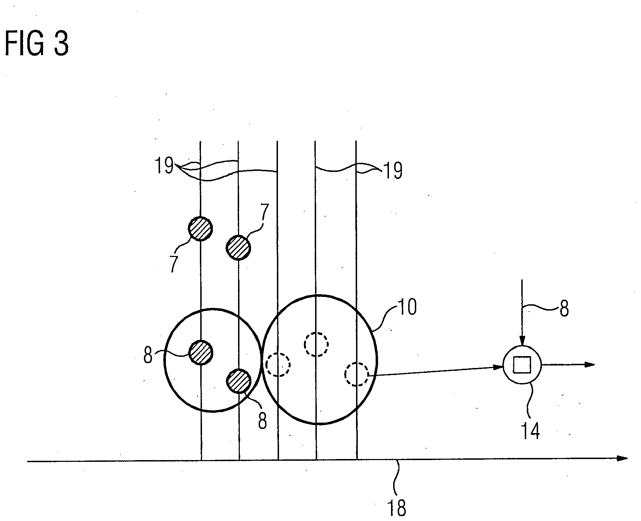

To illustrate the calculation of the prediction data set 10 FIG 3 is used. Based on already existing measured values 7, 8 from the first sensor 4 and the second sensor 5 the prediction data set 10 is determined by the computing device 6. According to the image plane and pointing to the right an arrow schematically marks the axis of abscissae which relates to the time 18, whereat the time 18 increases from the left to the right according to the direction of the arrow. In perpendicular direction to this arrow time steps 19 are shown schematically, whereat the time steps 19 rise from the left to the right in their chronological order and in relation to the direction of the arrow.
In other words for example the time step 19 which is placed farthest right relates to a current point in time or near future events and the time steps 19 placed to the left of the farthest right time step 19 each relate to a point of time in the past.

Thus, as seen in FIG 3 by means of the measured values 7, 8 from the past and by means of both their values and their chronological sequence the prediction data set 10 is generated. The prediction data set 10 is compared with the measured value 8 from the second sensor 5. In other words, the prediction data set 10 is computed by the computing device 6 whereat initially no comparable data are available. The determination of the difference 14 can be done in two ways:
- On the one hand the already known measured values 7, 8 are at first withheld from the computing device 6, whereat a validation of the prediction data set 10 by means of the withheld measured values 8 can be carried out once the prediction data set 10 is generated. In other words, by withholding of data or of the measured values 7, 8 a validation of the computing device respectively of the prediction data set 10 which is generated by the computing device 6 can be carried out allowing an evaluation of the model quality.
- If the quality of prediction of the prediction data set 10 is sufficiently high, current data or respectively the measured values 7, 8 are fed to the computing device 6, whereat the prediction data set 10, which is generated as a result of that, contains future events, for which no comparable measured values 7 are at hand.

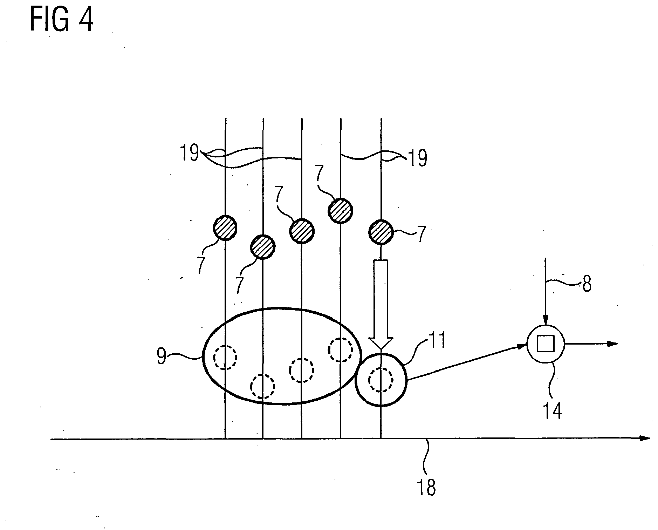

FIG 4 shows the contents of FIG 3 in substantial parts and therefore only the differences are described

FIG 4 illustrates the determination of the currently modeled data values 11 by the computing device 6. Unlike the calculation of the prediction data set 10, here only the measured values of only one sensor namely the measured values 7 from the sensor 4 are available. Here the measured values 7 from the sensor 4, which were comprised at different time steps 19 are used for generating a current modeled data set 11 within the framework of a simulation. Instead of the measured values 8 from the second sensor 5, modeled data values 9, which correspond with according measured values 7 are used for the creation of the current modeled data values 11.
In other words, these modeled data values 9 are data values, which were generated in the framework of earlier simulations, and which are therefore already known. Furthermore the current modeled data value 11 is related to a measured value 7 from the first sensor 4 which is comprised at a current point in time.

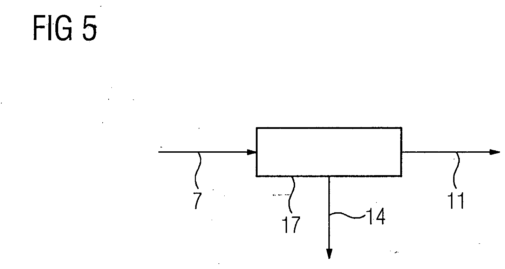

On the basis of a block diagram FIG 5 schematically shows the input and output variables of the linear transfer function model 17, which is designed as an ARMAX model. The computing device 6 uses this linear transfer function model 17 (see FIG 1, FIG 2). As input variables so-called exogenous input variables are used whereat the current modeled data values 11 comply with the output variables. As exogenous input variables such input variables which are independent to each other are to be understood. As a result as the exogenous input variables the measured values 7 of the at least one first sensor 4 are used, whereat the measured values 7 are already known from previous time steps 19. As model error the difference 14 is used.
Here, as the difference 14 on the one hand the difference between real measured values 8 and corresponding prediction data sets 10 and on the other hand the so-called mean standard deviation can be used. Both the modeled data values 9 and the expected output values are used whereat for each of them their corresponding time step 19 is taken into account.

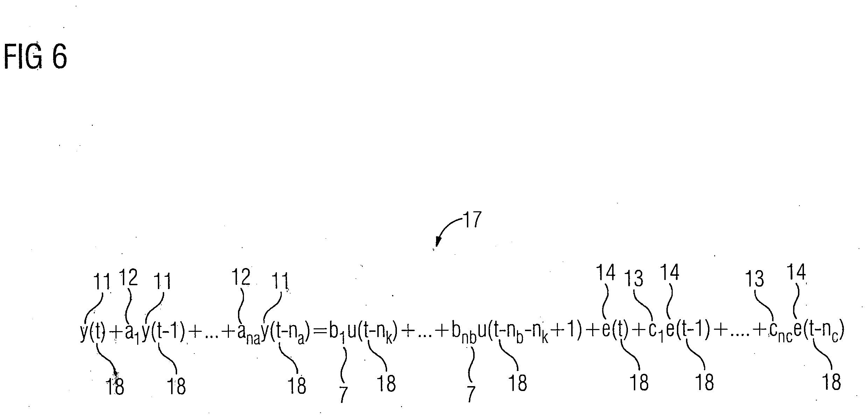

FIG 6 illustrates schematically and in substantial parts an equation which is the basis of the linear transfer function model 17. This equation substantially expresses the mathematical definition of an ARMAX-model. It can be seen that on both sides of the equation the time 18 is taken into account. To regard different time steps 19 with this equation, different Terms are subtracted from the time 18. This terms are related with coefficients, which are part of the regression data set and/or the mean value data set 13 and/or the exogenous input values. In other words measured values 7 are taken into account for this equation whereat these measured values are independent of each other. Furthermore, the difference 14 is used for the equation.

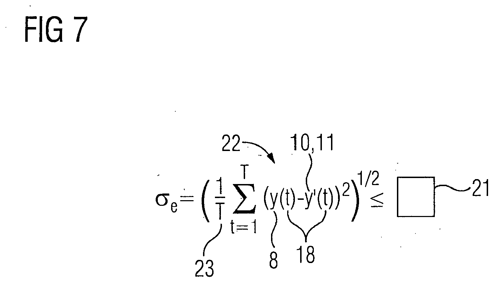

FIG 7 schematically illustrates the mathematical description of a standard deviation 22, which is used as a criterion to terminate the enhancement of the model quality of the linear transfer function model 17 by means of the real measured values 7, 8 as soon as the model quality is sufficiently high. In other words a part of the respectively corresponding measured values 7, 8 is used by the computing device 6 to reduce the difference 14 between the prediction data set 10 and the measured values 8 or respectively between the current modeled data set 11 and the measured values 8 for future simulations, which are computed by the computing device 6. Thus with this termination criterion it is determined whether the model quality is sufficiently high. This is the case if the standard deviation 22 is below or equal to a threshold 21 which is given by the operating personnel which is operating the computing device 6. Also the time 18 and a time step number 23 is taken into account when the standard deviation 22 is calculated. The time step number 23 relates to the number of time steps 19, which are taken into account when the standard deviation 22 is determined.

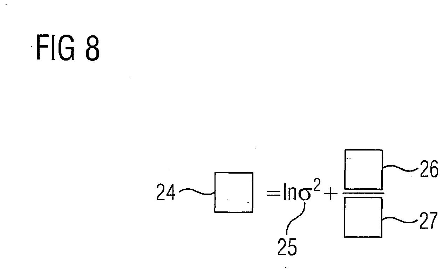

FIG 8 illustrates schematically and exemplarily another possibility to terminate the enhancement of the model quality of the linear transfer function model 17 using real measured values 8 once the model quality is sufficiently high. Therefor a so-called Akaike information criterion 24 is used.

For the determination of the Akaike information criterion 24 a variance 25 is taken into account, which contains at least substantially the components of the standard deviation 22 which is illustrated in FIG 7. Furthermore a double model length 26 and a length of training data set 27 is integrated in the Akaike information criterion 24. The length of training data set 27 corresponds to at least a subset of the double model length 26.

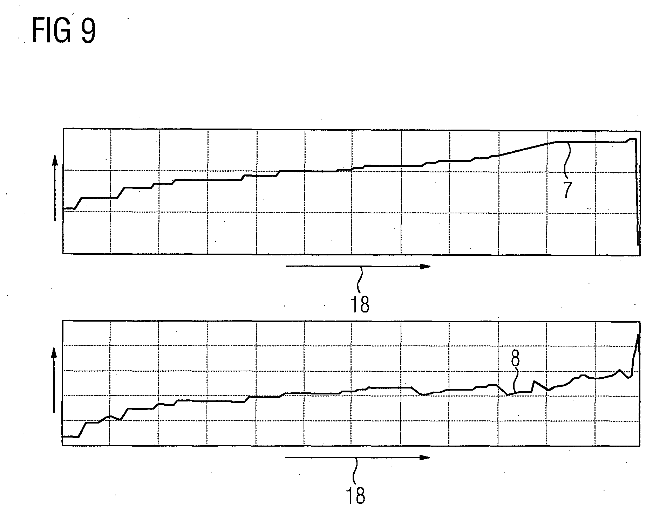

FIG 9 by way of example illustrates the course of real measured values 7,8 of the two sensors 4, 5 over time, with the first sensor 4 being configured as water level sensor and being arranged in the water 2 and the second sensor 5 being configured as pore pressure sensor and being arranged in the dam 1. The respective temporal courses of the measured values 7, 8 are represented in the corresponding diagrams, wherein in the top diagram according to the image plane the temporal course of the measured value 7 of the sensor 4 is plotted and in the bottom diagram according to the image plane the measured value 8 of the sensor 5 is plotted. In the diagrams as respective abscissa the time 18 is plotted, which according to the image plane rises according to the respective horizontal arrow direction from the left to the right. Moreover, in the diagrams as respective ordinate a physical quantity corresponding to the respective measured values 7, 8, such as the pressure is plotted, which according to the respective vertical arrow direction rises from bottom to top.

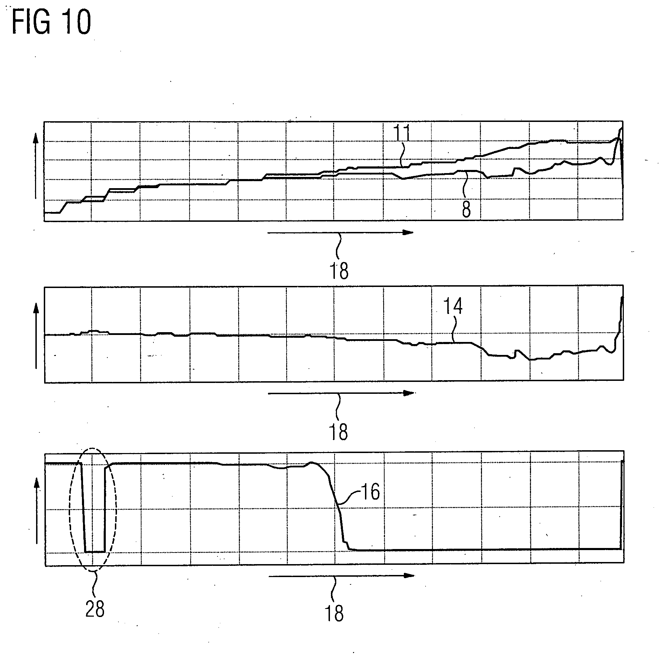

FIG 10 shows three examples of a diagram. According to the image plane in the top diagram the temporal course of the real measured value 8 of the second sensor 5 as well as the temporal course of the corresponding associated currently modeled data value 11 is plotted. In the central diagram the temporal course of the difference 14 resulting from the deviation of the measured value 8 of the modeled data set 11 is plotted, which is also referred to as model error. This model error for instance is used for improving the model quality of the linear transfer function model 17 of the computing device 6. In the bottom diagram the temporal course of the associated confidence value 16 is plotted.

The temporal course of the confidence value 16 comprises an unknown behaviour 28 at the beginning of the recording of the measured value, which points to the state of the dam 1 that at this point in time cannot be evaluated. In other words, the number of modeled data values 9 is too small for the simulation to possibly generate a reliable statement in the form of a confidence value 16 that is of high quality. In the further temporal course a sufficient number of modeled data values 9 exists for providing a reliable statement by means of a confidence value 16 of high quality, as to whether a damage in the dam 1 is impending.

In the diagrams as respective abscissa the time 18 is plotted, which according to the image plane rises according to the respective horizontal arrow direction from the left to the right. Moreover, according to the image plane as ordinate of the respective diagrams in the case of the representation of the measured values 8, the modeled data sets 11 or their difference 14 a corresponding physical quantity, such as a pressure, is plotted, which according to the respective vertical arrow direction rises from bottom to top. The confidence value 16 serves as indicator of looming damage or of already existing damage in the dam 1.

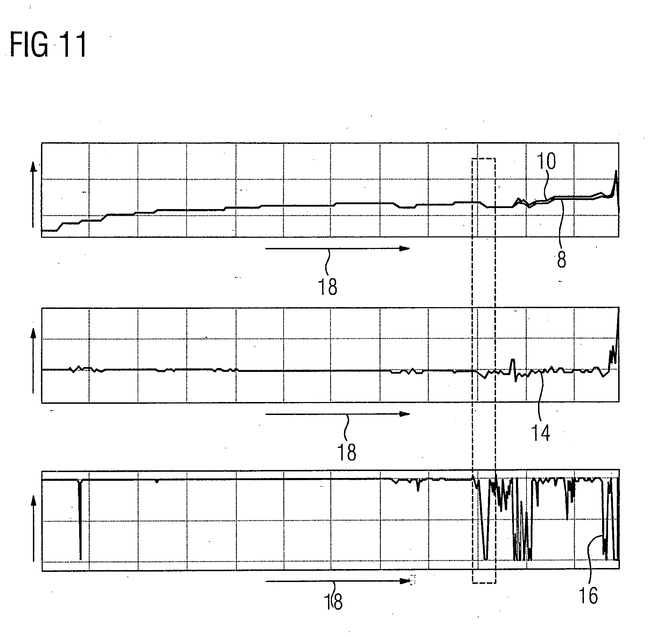

FIG 11 in large parts illustrates the contents shown in FIG 10, for which reason here merely the differences are pointed out. In the top diagram according to the image plane the temporal course of the measured value 8 of the second sensor 5 as well as the associated prediction data set 10 is represented. The corresponding difference 14 between the measured value 8 and the prediction data set 10 is plotted in the central diagram and the corresponding confidence value 16 in the bottom diagram. Accordingly, on the basis of the amplitudes of the confidence value 16 in the right part of the diagram conclusions as to an impending or existing damage in the dam 1 can be drawn.

## Claims

1. A method for monitoring a structure (1), which separates a first medium (2) from a second medium (3), wherein
a) the first medium (2) exerts a higher pressure on the structure (1) than the second medium (3) and
b1) wherein at least one first sensor (4) on the higher pressure side and
b2) at least one second sensor (5) on the lower pressure side each capture at least one physical quantity concerning this structure (1),
c) wherein a dependency in terms of a physical correlation (20) exists between these physical quantities and relates to a real transfer function, and wherein one computing device (6) transmits respective measured values (7, 8) concerning the corresponding physical quantities, wherein
d) on the basis of the measured value of the first sensor (4) a data value (9) of the second sensor (5) is modeled by using a linear transfer function model (17), based on regression data sets (12), prediction data sets (10) and mean value data sets (13), wherein the prediction data sets (10) are generated based on both the measured values (7, 8) of the first and second sensor (4, 5) from the past and their chronological sequence;
e) wherein the modeled data value (9) and the measured value (8) of the second sensor (5) are used for assessment of the structure (1);
f) wherein from a comparison of the prediction data set (10) with the measured values (8) of the at least one second sensor (5) a deviation (14) is determined and wherein the comparison is conducted in time-steps (19).

2. The method according to claim 1 **characterized in that** as the at least one first sensor (4) a sensor arranged in the first medium (2) is employed and as the at least one second sensor (5) a sensor arranged in the structure (1) is employed.

3. The method according to claims 1 or 2, **characterized in that** as the at least one first sensor (4) and as the at least one second sensor (5), a sensor arranged in the structure (1) is employed.

4. The method according to any one of claims 1 to 3, **characterized in that** the computing device (6) on the basis of already known measured values of the at least one first sensor (4) and modeled data values (9) corresponding to the measured values models a current data value (11), which is used for the assessment of the structure (1), wherein from a comparison of the current modeled data value (11) with the already known measured values (8) of the at least one second sensor (5) a deviation (14) is identified.

5. The method according to any one of claims 1 to 4, **characterized in that** for modeling the data value (9) regression data sets (12) concerning the measured values (7, 8) and mean value data sets (13) concerning the measured values (7, 8) are employed.

6. The method according to claim 5, **characterized in that** the mutual dependency of the measured values (7, 8) of the at least one first sensor (4) and of the at least one second sensor (5) are established in consideration of the regression data sets (12).

7. The method according to any one of claims 1 to 6, **characterized in that** a difference (14) between the modeled data value (9) and the measured value (8) of the at least one second sensor (5) is evaluated by a classification component (15) and by this classification component (15) a confidence value (16) for the existence of a normal state of the structure (1) is established.

8. The method according to any one of claims 1 to 7, **characterized in that** the computing device (6) employs a linear transfer function model (17) in order to describe the mutual dependency of the measured values (7,8) of the at least one first sensor (4) and the at least one second sensor (5).

9. A monitoring device for a structure (1), by means of which a first medium (2) is capable of being separated from a second medium (3),
a) wherein by means of the first medium (2) a higher pressure is capable of being exerted on the structure (1) than by means of the second medium (3), the structure (1) comprising
b1) at least one first sensor (4) on the higher pressure side and
b2) at least one second sensor (5) on the lower pressure side for capturing each at least one physical quantity concerning this structure (1),
c) wherein a dependency in terms of a physical correlation (20) between these physical quantities exists and relates to a real transfer function, and
d) a computing device (6), by means of which measured values (7, 8) concerning the corresponding physical quantities are capable of being transmitted, wherein
e) the computing device (6) is configured to model a data value (9) of the second sensor (5) on the basis of the measured value (7) of the first sensor (4) and by using a linear transfer function model (17), based on regression data sets (12), prediction data sets (10) and mean value data sets (13), wherein the prediction data sets (10) are generated based on both the measured values (7, 8) of the first and second sensor (4, 5) from the past and their chronological sequence;
f) to use the modeled data value (9) and the measured value (8) of the second sensor (5) for the assessment of the structure (1); and
g) wherein from a comparison of the prediction data set (10) with the measured values (8) of the at least one second sensor (5) a deviation (14) is determined and wherein the comparison is conducted in time-steps (19).

## Patentansprüche

1. Verfahren zur Überwachung einer Struktur (1), die ein erstes Medium (2) von einem zweiten Medium (3) trennt, wobei
a) das erste Medium (2) einen höheren Druck auf die Struktur (1) ausübt als das zweite Medium (3), und
b1) wobei mindestens ein erster Sensor (4) auf der ersten Seite höheren Drucks und
b2) mindestens ein zweiter Sensor (5) auf der Seite niedrigeren Drucks jeweils mindestens eine physikalische Größe bezüglich dieser Struktur (1) erfassen,
c) wobei eine Abhängigkeit in Bezug auf eine physikalische Korrelation (20) zwischen diesen physikalischen Größen besteht und mit einer reellen Übertragungsfunktion in Beziehung steht, und wobei eine Computervorrichtung (6) jeweilige Messwerte (7, 8) bezüglich der entsprechenden physikalischen Größen sendet, wobei
d) auf der Basis des Messwerts des ersten Sensors (4) ein Datenwert (9) des zweiten Sensors (5) durch Verwenden eines linearen Übertragungsfunktionsmodells (17) basierend auf Regressionsdatensätzen (12), Vorhersagedatensätzen (10) und Mittelwertdatensätzen (13) modelliert wird, wobei die Vorhersagedatensätze (10) sowohl basierend auf den Messwerten (7, 8) des ersten und des zweiten Sensors (4, 5) aus der Vergangenheit als auch ihrer chronologischen Reihenfolge erzeugt werden;
e) wobei der modellierte Datenwert (9) und der Messwert (8) des zweiten Sensors (5) zur Beurteilung der Struktur (1) verwendet werden;
f) wobei aus einem Vergleich des Vorhersagedatensatzes (10) mit den Messwerten (8) des mindestens einen zweiten Sensors (5) eine Abweichung (14) bestimmt wird, und wobei der Vergleich in Zeitschritten (19) durchgeführt wird.

2. Verfahren nach Anspruch 1, **dadurch gekennzeichnet, dass** als der mindestens eine erste Sensor (4) ein Sensor eingesetzt wird, der im ersten Medium (2) angeordnet ist, und als der mindestens eine zweite Sensor (5) ein Sensor eingesetzt wird, der in der Struktur (1) angeordnet ist.

3. Verfahren nach Anspruch 1 oder 2, **dadurch gekennzeichnet, dass** als der mindestens eine erste Sensor (4) und als der mindestens eine zweite Sensor (5) ein Sensor eingesetzt wird, der in der Struktur (1) angeordnet ist.

4. Verfahren nach einem der Ansprüche 1 bis 3, **dadurch gekennzeichnet, dass** die Computervorrichtung (6) auf der Basis von bereits bekannten Messwerten des mindestens einen ersten Sensors (4) und modellierten Datenwerten (9), die den Messwerten entsprechen, einen aktuellen Datenwert (11) modelliert, der zur Beurteilung der Struktur (1) verwendet wird, wobei aus einem Vergleich des aktuellen modellierten Datenwerts (11) mit den bereits bekannten Messwerten (8) des mindestens einen zweiten Sensors (5) eine Abweichung (14) identifiziert wird.

5. Verfahren nach einem der Ansprüche 1 bis 4, **dadurch gekennzeichnet, dass** zum Modellieren des Datenwerts (9) Regressionsdatensätze (12) bezüglich der Messwerte (7, 8) und Mittelwertdatensätze (13) bezüglich der Messwerte (7, 8) eingesetzt werden.

6. Verfahren nach Anspruch 5, **dadurch gekennzeichnet, dass** die gegenseitige Abhängigkeit der Messwerte (7, 8) des mindestens einen ersten Sensors (4) und des mindestens einen zweiten Sensors (5) unter Berücksichtigung der Regressionsdatensätze (12) festgelegt wird.

7. Verfahren nach einem der Ansprüche 1 bis 6, **dadurch gekennzeichnet, dass** eine Differenz (14) zwischen dem modellierten Datenwert (9) und dem Messwert (8) des mindestens einen zweiten Sensors (5) durch eine Klassifizierungskomponente (15) bewertet wird und durch diese Klassifizierungskomponente (15) ein Vertrauenswert (16) für das Vorliegen eines normalen Zustands der Struktur (1) festgelegt wird.

8. Verfahren nach einem der Ansprüche 1 bis 7, **dadurch gekennzeichnet, dass** die Computervorrichtung (6) ein lineares Übertragungsfunktionsmodell (17) einsetzt, um die gegenseitige Abhängigkeit der Messwerte (7, 8) des mindestens einen ersten Sensors (4) und des mindestens einen zweiten Sensors (5) zu beschreiben.

9. Überwachungsvorrichtung für eine Struktur (1), durch welche ein erstes Medium (2) von einem zweiten Medium (3) getrennt werden kann,
a) wobei durch das erste Medium (2) ein höherer Druck auf die Struktur (1) ausgeübt werden kann als durch das zweite Medium (3), wobei die Struktur (1) umfasst:
b1) mindestens einen ersten Sensor (4) auf der ersten Seite höheren Drucks und
b2) mindestens einen zweiten Sensor (5) auf der Seite niedrigeren Drucks zum jeweiligen Erfassen mindestens einer physikalischen Größe bezüglich dieser Struktur (1),
c) wobei eine Abhängigkeit in Bezug auf eine physikalische Korrelation (20) zwischen diesen physikalischen Größen besteht und mit einer reellen Übertragungsfunktion in Beziehung steht, und
d) eine Computervorrichtung (6), durch welche Messwerte (7, 8) bezüglich der entsprechenden physikalischen Größen gesendet werden können, wobei
e) die Computervorrichtung (6) konfiguriert ist zum Modellieren eines Datenwerts (9) des zweiten Sensors (5) auf der Basis des Messwerts (7) des ersten Sensors (4) und durch Verwenden eines linearen Übertragungsfunktionsmodells (17) basierend auf Regressionsdatensätzen (12), Vorhersagedatensätzen (10) und Mittelwertdatensätzen (13), wobei die Vorhersagedatensätze (10) sowohl basierend auf den Messwerten (7, 8) des ersten und des zweiten Sensors (4, 5) aus der Vergangenheit als auch ihrer chronologischen Reihenfolge erzeugt werden;
f) zum Verwenden des modellierten Datenwerts (9) und des Messwerts (8) des zweiten Sensors (5) zur Beurteilung der Struktur (1); und
g) wobei aus einem Vergleich des Vorhersagedatensatzes (10) mit den Messwerten (8) des mindestens einen zweiten Sensors (5) eine Abweichung (14) bestimmt wird, und wobei der Vergleich in Zeitschritten (19) durchgeführt wird.

## Revendications

1. Procédé de surveillance d'une structure (1), qui sépare un premier milieu (2) d'un second milieu (3), dans lequel :
a) le premier milieu (2) exerce une pression plus élevée sur la structure (1) que le second milieu (3), et
b1) où au moins un premier capteur (4) se trouve du côté de la pression supérieure, et
b2) au moins un deuxième capteur (5) du côté de la pression inférieure capture chacun au moins une grandeur physique concernant cette structure (1),
c) où une dépendance en termes de corrélation physique (20) existe entre ces grandeurs physiques et concerne une fonction de transfert réelle, et où un dispositif de calcul (6) transmet les valeurs mesurées respectives (7, 8) concernant les grandeurs physiques correspondantes, où :
d) sur la base de la valeur mesurée du premier capteur (4), une valeur de données (9) du deuxième capteur (5) est modélisée en utilisant un modèle de fonction de transfert linéaire (17), basé sur des ensembles de données de régression (12), des ensembles de données de prédiction (10) et des ensembles de données de valeur moyenne (13), où les ensembles de données de prédiction (10) sont générés sur la base à la fois des valeurs mesurées (7, 8) du premier et du deuxième capteur (4, 5) du passé et de leur séquence chronologique ;
e) où la valeur de données modélisée (9) et la valeur mesurée (8) du deuxième capteur (5) sont utilisées pour l'évaluation de la structure (1) ;
f) où, à partir d'une comparaison de l'ensemble de données de prédiction (10) avec les valeurs mesurées (8) de l'au moins un deuxième capteur (5), un écart (14) est déterminé, et où la comparaison est effectuée par pas de temps (19).

2. Procédé selon la revendication 1, **caractérisé en ce qu'**on utilise comme l'au moins un premier capteur (4) un capteur disposé dans le premier milieu (2) et comme l'au moins un deuxième capteur (5) un capteur disposé dans la structure (1).

3. Procédé selon la revendication 1 ou la revendication 2, **caractérisé en ce qu'**on utilise comme l'au moins un premier capteur (4) et comme l'au moins un deuxième capteur (5), un capteur disposé dans la structure (1).

4. Procédé selon l'une quelconque des revendications 1 à 3, **caractérisé en ce que** le dispositif de calcul (6), sur la base de valeurs de mesure déjà connues de l'au moins un premier capteur (4) et de valeurs de données modélisées (9) correspondant aux valeurs mesurées, modélise une valeur de données courante (11), qui est utilisée pour l'évaluation de la structure (1), une déviation (14) étant identifiée à partir d'une comparaison de la valeur de données modélisée courante (11) avec les valeurs mesurées déjà connues (8) de l'au moins un deuxième capteur (5).

5. Procédé selon l'une quelconque des revendications 1 à 4, **caractérisé en ce que**, pour la modélisation de la valeur de données (9), des ensembles de données de régression (12) concernant les valeurs mesurées (7, 8) et des ensembles de données de valeur moyenne (13) concernant les valeurs mesurées (7, 8) sont employés.

6. Procédé selon la revendication 5, **caractérisé en ce que** la dépendance mutuelle des valeurs mesurées (7, 8) de l'au moins un premier capteur (4) et de l'au moins un deuxième capteur (5) est établie en tenant compte des ensembles de données de régression (12).

7. Procédé selon l'une quelconque des revendications 1 à 6, **caractérisé en ce qu'**une différence (14) entre la valeur de données modélisée (9) et la valeur mesurée (8) de l'au moins un deuxième capteur (5) est évaluée par un composant de classification (15) et, par ce composant de classification (15), une valeur de confiance (16) pour l'existence d'un état normal de la structure (1) est établie.

8. Procédé selon l'une quelconque des revendications 1 à 7, **caractérisé en ce que** le dispositif de calcul (6) emploie un modèle de fonction de transfert linéaire (17) afin de décrire la dépendance mutuelle des valeurs mesurées (7, 8) de l'au moins un premier capteur (4) et de l'au moins un deuxième capteur (5).

9. Dispositif de surveillance d'une structure (1), au moyen duquel un premier milieu (2) peut être séparé d'un second milieu (3),
a) dans lequel, au moyen du premier milieu (2), une pression plus élevée peut être exercée sur la structure (1) qu'au moyen du second milieu (3), la structure (1) comprenant :
b1) au moins un premier capteur (4) du côté de la pression supérieure, et
b2) au moins un deuxième capteur (5) du côté de la pression inférieure pour capturer chaque au moins une grandeur physique concernant cette structure (1),
c) où une dépendance en termes de corrélation physique (20) entre ces quantités physiques existe et concerne une fonction de transfert réelle, et
d) un dispositif de calcul (6), au moyen duquel des valeurs mesurées (7, 8) concernant les grandeurs physiques correspondantes ont la capacité d'être transmises, où :
e) le dispositif de calcul (6) est configuré pour modéliser une valeur de données (9) du deuxième capteur (5) sur la base de la valeur mesurée (7) du premier capteur (4) et, en utilisant un modèle de fonction de transfert linéaire (17), sur la base d'ensembles de données de régression (12), d'ensembles de données de prédiction (10) et d'ensembles de données de valeur moyenne (13), où les ensembles de données de prédiction (10) sont générés sur la base à la fois des valeurs mesurées (7, 8) du premier et du deuxième capteur (4, 5) du passé et de leur séquence chronologique ;
f) pour utiliser la valeur de données modélisée (9) et la valeur mesurée (8) du deuxième capteur (5) pour l'évaluation de la structure (1) ; et
g) où, à partir d'une comparaison de l'ensemble de données de prédiction (10) avec les valeurs mesurées (8) de l'au moins un deuxième capteur (5), un écart (14) est déterminé, et où la comparaison est effectuée par pas de temps (19).
